Europäisches Patentamt

European Patent Office

Office européen des brevets

(11) Publication number : **0 457 587 A2**

# EUROPEAN PATENT APPLICATION

(21) Application number : 91304402.0

(22) Date of filing : 16.05.91

(51) Int. Cl.⁵ : **A23L 1/054, A24B 15/14, A23P 1/00**

(30) Priority : 17.05.90 US 530148

(43) Date of publication of application :
21.11.91 Bulletin 91/47

(84) Designated Contracting States :
CH DE FR GB IT LI NL

(71) Applicant : MERCK & CO. INC.
126, East Lincoln Avenue P.O. Box 2000
Rahway New Jersey 07065-0900 (US)

(72) Inventor : Colegrove, George T.
5238 Fontaine Street
San Diego, California 92120 (US)
Inventor : Lindroth, Thomas A.
11120 Scripps Ranch Blvd.
San Diego, California 92131 (US)

(74) Representative : Barrett-Major, Julie Diane et
al
Merck & Co., Inc. European Patent
Department Terlings Park Eastwick Road
Harlow Essex CM20 2QR (GB)

(54) Restructured food and plant products.

(57) Gellan gum is used as a binder for preparing restructured food and plant products.

EP 0 457 587 A2

## BACKGROUND OF THE INVENTION

In the commercial processing of many plant products, there is generated a large amount of material which, because of its size or shape, is of diminished value. Examples of such materials include dusts or fines produced in the preparations of ground spices and leaf trimmings from the rolling of cigars.

There are also plant parts which are generally not used, for the same reason, i.e., their shapes are not appropriate for the desired end product. An example of this is tobacco leaf stem and stalks.

Also, it is sometimes desirable to alter the shape of plant material so it can be processed in a particular manner. For example, U.S.P. 4,821,749 (Toft et al) teaches an extruded tobacco product made by a process which removes nicotine. The tobacco material used by Toft et al includes fines, dust, laminae, cut filler volume expanded tobacco. scrap, stems, stalks, sheets of reconstituted tobacco, rolled stems, whole leaf, and combinations thereof.

It is generally necessary to use a binding agent to restructure plant materials. Toft et al teaches a 0.2-6% (all percentage herein are on a wt./wt. basis unless otherwise indicated), xanthan gum/locust bean gum (LBG). U.S.P. 3,480,018 (Fairchild) teaches 2-10% xanthan gum/locust bean gum. DE 2,535,234 (Schwedt) teaches tea or spice dust agglomerated in a fluidized bed granulator. The process uses 0.2-5% carrageenan, agar, tragacanth, gum arabic, LBG, guar, polyvinylpyrrolidone, starch, modified starch, or cellulose. UK 2,000,428 (Schmidt et al) describes a reconstituted tobacco product containing tasmarind gum. EP 135,266 teaches the use of numerous water-soluble polysaccharides as adhesives to convert pyrolyzed tobacco plant materials into a form suitable for the preparation of smoking products.

With some plant materials no real system for reconstitution has been developed. Other plant materials have been reconstituted by using low solids casting processes. The present process allows the use of high solids and low binder levels. The use of gellan gum or blends of gellan gums can modify the viscosity, gelling characteristics, and flexibility of the finished products. For example, low acyl gellan gum is stiff and somewhat brittle, whereas high acyl gellan gum is somewhat elastic and flexible. Blends of these gellan gums produce a range of finished product flexibility and friability characteristics.

## SUMMARY OF THE INVENTION

It has now been found that restructured products can be formed comprising 0.2 to 4.0% gellan gum, the balance being plant material and any additional enhancers such as eggs, glycerine, salts etc. Optionally, up to about half of the gellan gum can be replaced with xanthan and/or a galactomannan; i.e., the ratio on a wt./wt. basis of gellan:

(xanthan + galactomannan) $\geq 2:1$.

One embodiment of this invention is the use and processing of plant products in combination with gellan gum to form usable strands, strips, sheets or larger particles from various powdered or shredded plant products. These strands, strips, sheets or larger particles can be made by casting, extrusion or compaction. The principle involved is the use of gellan gum, which forms gel structures upon heating and cooling, thus making it a very effective binder in reformed plant systems. These gelled structures make the initial product have excellent wet strength for further processing. The use of gellan gums is useful in binder systems in a range of 0.20% to 4.0% total gum based on the total weight of the restructured product. This low use level allows for better flavor and no apparent off-taste or offensive odor of the products when consumed or otherwise used.

Therefore, an embodiment of this invention is a restructured food or plant product comprising 0.2-4.0% gellan gum, optionally further comprising xanthan gum and/or a galactomannan wherein the wt./wt., ratio gellan: (xanthan + galactomannan) is equal to or greater than 2:1. This structured product can also contain enhancers, for example, eggs, glycerine, salts, etc., to vary moisture retention, flexibility, and other desirable properties of the final product.

Another embodiment of the invention is a process for preparing a structured food or plant product which comprises:

a) preparing an aqueous slurry comprising 0.2-4.0% gellan gum (with optionally up to 50% thereof replaced by xanthan gum or a galactomannan), a finely comminuted food or plant material, and water, wherein the water ranges from about 20-80%;

b) dissolving the gellan gum by heating the slurry to 80-90°C and

c) shaping the heated slurry, as by extrusion or sheeting, and cooling the shaped product to a temperature below about 60°C, preferably room temperature to gel the shaped product.

The shaped product may then be and is preferably dried to 8-15% moisture content and, after drying, may be further processed to a final product. Such final processing is by techniques well known in the art for the processing of un-restructured food and plant products such as rolling, milling, chopping, grinding, etc.

## DETAILED DESCRIPTION

The present invention permits the re-use of plant products such as spice dust, spice scraps, tobacco dust, stems of spice and tobacco, etc. formed during normal processing and manufacture. By binding these otherwise discarded materials into a form similar to the original starting material, they can be reprocessed like normal plant materials with significant additional value. The low binder solids allow for easier processing and products which more closely match the original whole material after restructuring compared to high binder systems. In addition, the gellan gum provides moisture control and prevents excessive drying, which can change the flavor and aroma of the plant products. The present invention also allows for the incorporation of other materials which can enhance the utility of the finished product.

By the term "gellan gum" as used herein, is meant the native, fully acylated, extracellularly produced gum made by the heteropolysaccharide-producing bacterium Pseudomonas elodea, ATCC 31461, by the whole culture fermentation under a variety of conditions of a medium comprising: a fermentable carbohydrate, a nitrogen source, and other appropriate nutrients. Also included are the deacylated, partially deacylated and the clarified forms thereof. Partially deacylated gellan gum refers to gellan gum having less than 100% but greater than 0% acyl content compared to native gellan gum. Examples, inter alia, of commercially available gellan gums are KELCOGEL® and GELRITE®, available from Kelco Division of Merck & Co., Inc. Gellan gum is also known as S-60.

Processes for producing gellan gum are well-known in the art, e.g., U.S. Patents, 4,326,052, 4,326,053, and 4,563,366.

Xanthan gum, as used herein, refers to the biosynthetic polysaccharide produced by the organism Xanthomonas campestris by the whole culture fermentation of a medium comprising a fermentable carbohydrate, a nitrogen source, and appropriate other nutrients.

Xanthan gum preparation is described in numerous publications and patents, e.g., U.S. Pat Nos. 3,671,398; 3,594,280; 3,591,578; 3,481,889; 3,433,708; 3,427,226; 3,391,061; 3,391,060; 3,271,267; 3,251,749; 3,020,206.

Galactomannan, as used herein, refers to locust bean gum (1bg), cassia gum, and tara gum.

Cassia gum. like 1bg, is a pod extract, derived from Cassia occidentalis or fistula.

The following plant extracts are described in "Polysaccharides in Food", Blanshard et al., 232-235, Buttersworth & Co., Ltd., 1979.

Locust bean gum (1bg) is an extract of the locust bean or carob, Ceratonia siligua. It is commercially available and used as a stabilizer in foods such as ice cream, sausages, and cheese.

Tara gum is vegetable gum derived from the seed of the legume Cesalpinia spinosa.

As used herein, food product refers to any normally comestible vegetable matter. This specifically includes flour, starch, and spices. Plant product refers to any normally non-comestible vegetable matter, specifically tobacco.

The invention is further defined by reference to the following examples, which are intended to be illustrative and not limiting. In the Examples, KELCOGEL® refers to low acyl gellan gum.

## EXAMPLE 1

### PASTA

|  | (%) |
|---|---|
| Semolina flour | 72.0 |
| KELCOGEL® | 0.5 |
| Water | 27.5 |

Procedure:

The flour and the gum were dry blended first. The water was then added and mixed well. The dough was then kneaded for 10 minutes and placed in a water impermeable plastic bag. The dough was permitted to equilibrate at ambient temperature for 2 hours before extruding.

The extrusion was done on a Brabender Type 2003 Extruder. The barrel had a diameter of 19.5 mm with a 20D length ratio (ratio of length to diameter) and was rifled with eight 0.8 mm x 2.0 mm longitudinal grooves. A 1:1 compression ratio screw was used together with a 0.01 inch x 0.50 inch slit die. The unit had a variable speed drive and the barrel was equipped with electrical heaters and compressed air cooled collars. The screw speed was maintained at 75 rpm and at an isothermal barrel temperature of 100°C.

A control was prepared in the same manner and extruded under the same conditions but without the gellan gum.

Results:

The sample containing the gellan gum yielded much higher wet strength than the control. The dry (8% moisture) strength of the gellan sample was also stronger. The gellan sample produced a 50% reduction in loss of weight during cooking. The cooking procedure was to boil 100 g pasta in DI water for 10 minutes, then drain the cooked pasta, dry to 8% moisture, and re-weigh the pasta. This was also done to the controls without gellan gum.

EXAMPLE 2

PASTA

|  | (%) |
|---|---|
| All purpose flour | 72.0 |
| KELCOGEL® | 0.5 |
| Whole egg | 23.5 |
| Water | 4.0 |

Procedure:

The procedure of Example 1 was followed except that the egg and water were added together and mixed well, and the isothermol barrel temperature was 95°C.

Results:

Following the protocol of Example 1, the sample containing the gellan gum yielded much higher wet strength than the control. The dry strength of the gellan sample was also higher. The gellan sample produced a 40% reduction in loss of weight during cooking.

EXAMPLE 3

PASTA

|  | (%) |
|---|---|
| Rice flour | 72.0 |
| KELCOGEL® | 0.5 |
| Whole egg | 23.5 |
| Water | 4.0 |

Procedure:

The procedure of Example 2 was followed except that the isothermal barrel temperature was 90°C.

Results:

Following the protocol of Example 1, the sample containing the gellan gum yielded much higher wet strength than the control. The dry strength of the gellan sample was also higher. The gellan sample produced a 45% reduction in loss of weight during cooking.

## EXAMPLE 4
### BASIL EXTRUSION (70% SOLIDS)

|                | (%)  |
|----------------|------|
| Basil powder   | 70.0 |
| KELOCOGEL®     | 1.0  |
| Water (DI)     | 29.0 |

Procedure:

The basil powder was uniformly dry blended with the gellan gum (through 100 mesh). This blend was then sprayed and mixed with the required water. This damp mixture was then extruded through the Brabender Extruder at 2 1bs./hr. and heated to 85°C at 225 psi.

Results:

The extruded material gelled well upon cooling and had excellent wet strength and handleability. The processed basil strip was dried at 100°F (37.8°C), 50% relative humidity (RH) for 3 hrs., yielding an 11% moisture product with good dry strength. The strips were then broken into flakes. The flakes were then compared to natural basil flakes. This comparison showed few differences between the two products.

## EXAMPLE 5
### BASIL EXTRUSION (70% SOLIDS)

|                | (%)  |
|----------------|------|
| Basil powder   | 70.0 |
| KELCOGEL®      | 0.5  |
| Water (DI)     | 29.5 |

Procedure:

The procedure of Example 4 was followed except that the pressure was 275 psi.

Results:

The extruded material gelled well upon cooling and had good wet strength and handleability. The strips were dried in the same manner as Example 4. They had 10% moisture with good dry strength. The strips were then broken into flakes. The flakes were then compared to natural basil flakes. This comparison showed few differences between the two products.

## EXAMPLE 6
### TOBACCO

|                       | (%)   |
|-----------------------|-------|
| Ground tobacco powder | 70.0  |
| KELCOGEL®             | 1.0   |
| Water (DI)            | 29.0  |

Procedure:

The 60 mesh tobacco powder was uniformly dry blended with the gellan gum. This blend was then sprayed and mixed with the required water. This damp mixture was then extruded through the Brabender Extruder at 2 1bs./hr. and heated to 85°C at 480 psi.

Results:

The extruded material gelled well upon cooling and had excellent wet strength and handleability. The processed tobacco strands were dried at 100°F (67.8°C), 50% RH for 3 hr., yielding a 12% moisture product with good dry strength. The extruded tobacco strands were then compared to cut filler tobacco strands, which showed minor differences between the two products.

## EXAMPLE 7
### TOBACCO

|                       | (%)   |
|-----------------------|-------|
| Ground tobacco powder | 70.0  |
| KELCOGEL®             | 0.5   |
| Water (DI)            | 29.5  |

Procedure:

The procedure of Example 6 was followed except that the pressure was 520 psi.

Results:

The extruded material gelled well upon cooling and had good wet strength and handleability. The strands were dried in the same manner as Example 6. They had 11% moisture and good dry strength. The extruded tobacco strands were then compared to cut filler tobacco strands, which showed minor differences between the two products.

## EXAMPLE 8
### TOBACCO

|                       | (%)   |
|-----------------------|-------|
| Ground tobacco powder | 70.0  |
| Native gellan gum     | 1.0   |
| Water (DI)            | 29.0  |

Procedure:

The procedure of Example 6 was followed.

Results:

The extruded material gelled well upon cooling. The wet strength was excellent. The strands were dried 100°F (67.8°C), 50% RH for 3 hrs., yielding a 13% moisture product with good dry strength and more flexibility than the product of Example 6. The extruded tobacco strands were then compared to cut filler tobacco strands, which showed minor differences between the two products.

## EXAMPLE 9
### TOBACCO

|                       | (%)   |
|-----------------------|-------|
| Ground tobacco powder | 20.0  |
| KELCOGEL®             | 0.2   |
| Glycerine             | 0.6   |
| $CaCl_2 \cdot 2H_2O$  | 0.3   |
| Water (DI)            | 78.9  |

Procedure:

The gellan gum was mixed into the DI water and heated to 90°C for 30 minutes. The $CaCl_2$, glycerine, and tobacco powder were added and mixed. The mixture was cast between two Mylar® polyester sheets on a casting table and cooled to ambient. Then the top Mylar® sheet was removed and the mixture dried at 100°F (67.8°C), 50% RH for 3 hours, to 10% moisture.

Results:

The sheet gelled well and after drying removed easily from the bottom Mylar® sheet. The sheet was brittle when compared to extruded strands.

## EXAMPLE 10
## TOBACCO

|  | (%) |
|---|---|
| Ground tobacco powder | 70.0 |
| KELCOGEL® | 0.5 |
| Native gellan gum | 0.5 |
| Water (DI) | 29.0 |

Procedure:

The procedure of Example 6 was followed except that the pressure was 470 psi.

Results:

The extruded material gelled well upon cooling and had excellent wet strength and handleability. This mixture of gellan gums produced a stiff, damp structure but remained flexible. The strands were dried 3 hours at 100°C, 50% RH, yielding a 12% moisture product with good dry strength. The dry strands were almost as flexible as the 1% native gellan strands of Example 8. The extruded tobacco strands were then compared to cut filler tobacco strands, which showed minor difference between the two products.

## Claims

1. A restructured food or plant product comprising 0.2 to 4.0% gellan gum.

2. A restructured product of Claim 1 comprising 0.2 to 4.0% gellan gum, xanthan gum, and optionally a galactomannan wherein the ratio gellan: (xanthan + galactomannan) ≥ 2:1.

3. A process for preparing restructured food or plant products which comprises;
   a) preparing an aqueous slurry comprising 0.2 to 4.0% gellan gum, a finely comminuted food or plant material and water;
   b) dissolving the gellan gum by heating said slurry to 80-90°C; and
   c) shaping and cooling said heated slurry.